# EUROPEAN PATENT APPLICATION

(11) **EP 4 282 528 A1**
(43) Date of publication of application: **29.11.2023**
(21) Application number: 22742517.0
(22) Date of filing: 14.01.2022
(51) Int. Cl.: B01J 35/10, H01M 4/86, H01M 4/88, H01M 4/92, H01M 8/10, B01J 23/42

(54) **FUEL CELL ELECTRODE CATALYST**

(30) Priority: 19.01.2021 JP 2021006426
(71) Applicant: CATALER CORPORATION, Kakegawa-shi, Shizuoka 437-1492 (JP)
(72) Inventor: HORI, Akihiro, Kakegawa-shi, Shizuoka 437-1492 (JP); MATSUMURA, Yuko, Kakegawa-shi, Shizuoka 437-1492 (JP)
(74) Representative: Ricker, Mathias
(86) International application number: PCT/JP2022/001183
(87) International publication number: WO 2022/158395

(57) **Abstract**

Provided is a fuel cell electrode catalyst in which catalytic metal particles made of Pt or a Pt alloy are supported on a carbon carrier, wherein the number of the catalytic metal particles per unit surface area of the carbon carrier is 4.3/100 nm² to 16.0/100 nm².

## Description

### FIELD

The present invention relates to a fuel cell electrode catalyst.

### BACKGROUND

Fuel cells are considered promising as next-generation cell types. Solid polymer fuel cells, in particular, have the advantages of low operating temperature, short start-up time and compactness, and have already begun to be implemented in fields such as automobile drive power supplies.

Solid polymer fuel cells have a structure with a cathode (air electrode), a solid polymer electrolyte membrane and an anode (fuel electrode) laminated in that order. In a solid polymer fuel cell, oxygen or air is supplied to the cathode while fuel such as hydrogen is supplied to the anode, whereupon oxidation-reduction reaction takes place at the electrodes, generating electric power.

The electrodes in the fuel cell include a fuel cell catalyst to promote the oxidation-reduction reaction. Commonly used fuel cell catalysts have catalyst particles supported on a carbon powder support. Pt particles and Pt alloy particles are known types of catalyst particles for fuel cell catalysts.

For example, PTL 1 describes a method for producing a Pt-supporting catalyst that reduces Pt precursor compounds in a liquid phase in the presence of carrier particles. PTL 2 describes the use of Pt alloy particles as catalyst particles to improve the activity of the cathode in a solid polymer fuel cell.

PTL 3 describes the combined use of an anode catalyst having Pt or a Pt alloy loaded onto a carbon carrier, and a water electrolysis catalyst such as IrO₂, in a catalyst layer on the anode side of a fuel cell.

### [CITATION LIST]

### [PATENT LITERATURE]

[PTL 1] Japanese Unexamined Patent Publication HEI No. 08-084930
[PTL 2] Japanese Unexamined Patent Publication No. 2003-142112
[PTL 3] Japanese Unexamined Patent Publication No. 2009-152143

### SUMMARY

### [TECHNICAL PROBLEM]

As mentioned above, in a fuel cell, and particularly in a solid polymer fuel cell, oxygen or air is supplied to the cathode while fuel such as hydrogen is supplied to the anode, whereupon oxidation-reduction reaction takes place at both electrodes, generating electric power. During operation of a fuel cell, however, a situation can occur in which the fuel supplied to the anode becomes deficient due to nitrogen permeating the cathode, or due to water aggregates generated by the fuel cell reaction.

When the fuel becomes deficient at the anode, a phenomenon occurs whereby protons are generated by the following reaction to replenish the deficient protons (H⁺), while the carbon carrier is also corroded and degraded.

C + 2H₂O -> CO₂ + 4H⁺ + 4e⁻

Moreover, even if fuel becomes deficient at the anode, the electric power voltage of the fuel cell is maintained so long as protons are supplied to the reaction. Degradation of the carbon carrier is therefore difficult to detect at an early stage. If initial degradation of the carbon carrier is ignored and degradation of the carbon carrier further progresses, catalyst metal particles may be shed from the carbon carrier, resulting in drastically reduced activity of the fuel cell electrode catalyst.

The present invention has been devised in light of these circumstances, and its object is to provide a fuel cell electrode catalyst with inhibited degradation of the carbon carrier during periods of fuel starvation, and with excellent maintenance of ECSA (ElectroChemical Surface Area).

### [SOLUTION TO PROBLEM]

The present invention is as follows.

### <Aspect 1>

A fuel cell electrode catalyst having catalyst metal particles made of Pt or a Pt alloy supported on a carbon carrier,
wherein the number of catalyst metal particles per unit surface area of the carbon carrier is 4.3/100 nm² or greater and 16.0/100 nm² or lower.

### <Aspect 2>

The fuel cell electrode catalyst according to aspect 1, wherein the number of catalyst metal particles per unit surface area of the carbon carrier is 6.0/100 nm² or greater and 10.0/100 nm² or lower.

### <Aspect 3>

The fuel cell electrode catalyst according to aspect 1 or 2, wherein the mean particle size of the catalyst metal particles is 5.0 nm or smaller.

### <Aspect 4>

The fuel cell electrode catalyst according to any one of aspects 1 to 3, wherein the mean particle size of the catalyst metal particles is 2.0 nm or larger and 3.5 nm or smaller.

### <Aspect 5>

The fuel cell electrode catalyst according to any one of aspects 1 to 4, wherein the loading amount of the catalyst metal particles per unit surface area of the carbon carrier is 6.0 mg/m² or greater.

### <Aspect 6>

The fuel cell electrode catalyst according to aspect 5, wherein the loading amount of the catalyst metal particles per unit surface area of the carbon carrier is 6.5 mg/m² or greater and 25.0 mg/m² or lower.

### <Aspect 7>

The fuel cell electrode catalyst according to any one of aspects 1 to 6, wherein the carbon carrier consists of graphitized carbon particles.

### <Aspect 8>

The fuel cell electrode catalyst according to any one of aspects 1 to 7, wherein the specific surface area of the carbon carrier is 10 m²/g or greater and 100 m²/g or lower.

### <Aspect 9>

The fuel cell electrode catalyst according to aspect 8, wherein the specific surface area of the carbon carrier is 20 m²/g or greater and 70 m²/g or lower.

### <Aspect 10>

A fuel cell anode having a catalyst layer that includes a fuel cell electrode catalyst according to any one of aspects 1 to 9.

### <Aspect 11>

A fuel cell electrode assembly that includes an anode according to aspect 10.

### <Aspect 12>

A fuel cell that includes a fuel cell electrode assembly according to aspect 11.

### [ADVANTAGEOUS EFFECTS OF INVENTION]

The present invention provides a fuel cell electrode catalyst with inhibited degradation of the carbon carrier during periods of fuel starvation, and with excellent maintenance of ECSA (ElectroChemical Surface Area).

### BRIEF DESCRIPTION OF DRAWINGS

Fig. 1 is a graph showing the relationship between the number of Pt particles per unit specific surface area of the carbon carrier (number/100 nm²) and post-endurance test ECSA, for catalysts of the Examples.
Fig. 2 is a graph showing the relationship between the number of Pt particles per unit specific surface area of the carbon carrier (number/100 nm²) and post-endurance test ECSA maintenance rate, for catalysts of the Examples.

### DESCRIPTION OF EMBODIMENTS

### <Fuel cell electrode catalyst>

The fuel cell electrode catalyst of the invention is a fuel cell electrode catalyst having catalyst metal particles made of Pt or a Pt alloy supported on a carbon carrier,
wherein the number of catalyst metal particles per unit surface area of the carbon carrier is 4.3/100 nm² or greater and 16.0/100 nm² or lower.

The fuel cell electrode catalyst of the invention has the number of catalyst metal particles per unit surface area of the carbon carrier restricted to a prescribed range.

The catalyst metal particles in the fuel cell electrode catalyst, when supported at active adsorption sites of the carbon carrier, are thought to be firmly adsorbed onto the carbon carrier to exhibit high catalytic activity.

If the number of catalyst metal particles per unit surface area of the carbon carrier is too large, more of the catalyst metal particles will be weakly adsorbed on the carbon carrier without being retained in the active adsorption sites of the carbon carrier, potentially resulting in lower catalytic activity due to coarsening of the catalyst metal particles. A possible mechanism for this coarsening may be coarsening of the catalyst metal particles by dissolution and reprecipitation, and subsequent migration and aggregation of the catalyst metal particles on the support. If the number of catalyst metal particles per unit surface area of the carbon carrier is too small, on the other hand, more active adsorption sites will remain on the carbon carrier which have not been protected by catalyst metal particles, and this may lead to decomposition of the carbon carrier and a resulting tendency toward degradation of the carbon carrier during periods of hydrogen deficiency.

In light of the above, the number of catalyst metal particles per unit surface area of the carbon carrier in the fuel cell electrode catalyst of the invention is restricted to a prescribed range, whereby degradation of the carbon carrier during periods of fuel starvation is inhibited and maintenance of the ECSA (electrochemical surface area) is superior.

The constituent features of the fuel cell electrode catalyst of the invention will now be explained in order.

### <Carbon carrier>

The carbon carrier in the fuel cell electrode catalyst of the invention may be carbon black, graphite, carbon fibers, active carbon, amorphous carbon or a nanocarbon material, for example. Nanocarbon materials include carbon nanotubes, graphene and fullerene.

Graphite is particularly suitable for use as the carbon carrier of the invention. The graphite may be either natural graphite or artificial graphite. Natural graphite includes lumpy graphite, amorphous graphite and flaky graphite. Artificial graphite includes graphitized carbon obtained by graphitizing of any type of carbon material. The carbon carrier of the invention may also be graphitized carbon particles.

The carbon carrier of the invention has a specific surface area of 10 m²/g or greater, 20 m²/g or greater, 30 m²/g or greater, 40 m²/g or greater or 50 m²/g or greater, and 100 m²/g or lower, 90 m²/g or lower, 80 m²/g or lower, 70 m²/g or lower or 60 m²/g or lower, as measured by the BET method using nitrogen as the adsorbate.

The specific surface area of the carbon carrier may be 10 m²/g and greater and 100 m²/g or lower or 20 m²/g and greater and 70 m²/g or lower, for example.

The particle size of the carbon carrier may be 5 nm or larger, 10 nm or larger, 20 nm or larger, 30 nm or larger or 50 nm or larger, and 500 nm or smaller, 300 nm or smaller, 200 nm or smaller or 100 nm or smaller, as the number-average primary particle size measured under an electron microscope.

The particle size of the carbon carrier can be calculated as the equivalent diameter number average, based on an electron microscope image taken of the fuel cell electrode catalyst. The "equivalent diameter" is the diameter of a perfect circle having a peripheral length equal to the peripheral length of the measured figure.

### <Catalyst metal particles>

The catalyst metal particles are made of Pt or a Pt alloy, and are supported on the carbon carrier.

When the catalyst metal particles are made of a Pt alloy, the Pt alloy may be an alloy including:
Pt, and
one or more metals selected from the group consisting of Ti, Cr, Mn, Fe, Co, Ni, Cu, Ga, Zr, Hf, Ru, Ir, Pd, Os and Rh.

A Pt alloy will typically be Pt-Fe alloy, Pt-Co alloy or Pt-Ni alloy.

The proportion of Pt atoms in the Pt alloy may be 50 mol% or greater, 60 mol% or greater, 70 mol% or greater, 75 mol% or greater, 80 mol% or greater or 85 mol% or greater, and 99 mol% or lower, 95 mol% or lower, 90 mol% or lower, 85 mol% or lower, 80 mol% or lower or 75 mol% or lower, as the percentage of the number of moles of Pt atoms with respect to the total number of moles of metal atoms in the Pt alloy.

The mean particle size of the catalyst metal particles may be 5.0 nm or smaller, 4.5 nm or smaller, 4.0 nm or smaller, 3.5 nm or smaller, 3.0 nm or smaller or 2.5 nm or smaller, and 1.0 nm or larger, 1.5 nm or larger, 2.0 nm or larger or 2.5 nm or larger. Catalyst metal particles having a mean particle size of 5.0 nm or smaller are advantageous in terms of a high ECSA. Catalyst metal particles having a mean particle size of 1.0 nm or larger are advantageous in terms of excellent maintenance of the ECSA when the fuel cell is operated for long periods. These advantages can be exhibited particularly when the fuel cell catalyst of the invention is used as an anode (fuel electrode).

The mean particle size of the catalyst metal particles may be 2.0 nm or larger and 3.5 nm or smaller, for example.

The mean particle size of the catalyst metal particles in the fuel cell electrode catalyst of the invention can be calculated by the Scherrer formula, based on the line width of the diffraction peak in powder XRD measurement of the fuel cell electrode catalyst. When the catalyst metal particles are Pt particles, for example, the mean particle size of the catalyst metal particles can be calculated by the Scherrer formula based on the line width of the diffraction peak for the (220) plane of Pt in powder XRD measurement of the fuel cell electrode catalyst. When the catalyst metal particles are made of a Pt alloy, the mean particle size of the catalyst metal particles can be calculated by small angle X-ray scattering or transmission electron microscopy (TEM).

The number of catalyst metal particles per unit surface area of the carbon carrier in the fuel cell electrode catalyst of the invention is 4.3/100 nm² or greater and 16.0/100 nm² or lower. As explained above, if the number of catalyst metal particles per unit surface area of the carbon carrier is too large, more of the catalyst metal particles will be weakly adsorbed on the carbon carrier without being retained in the active adsorption sites of the carbon carrier, potentially resulting in lower catalytic activity due to the coarseness of the catalyst metal particles. If the number of catalyst metal particles per unit surface area of the carbon carrier is too small, on the other hand, more active adsorption sites will remain on the carbon carrier which have not been protected by catalyst metal particles, and this may lead to decomposition of the carbon carrier and a resulting tendency toward degradation of the carbon carrier during periods of hydrogen deficiency.

From this viewpoint, the number of catalyst metal particles per unit surface area of the carbon carrier may be 4.4/100 nm² or greater, 4.5/100 nm² or greater, 5.0/100 nm² or greater, 6.0/100 nm² or greater, 80.0/100 nm² or greater, 10.0/100 nm² or greater or 12.0/100 nm² or greater, and 15.0/100 nm² or lower, 13.0/100 nm² or lower, 11.0/100 nm² or lower, 10.0/100 nm² or lower, 8.0/100 nm² or lower or 6.0/100 nm² or lower.

The number of catalyst metal particles per unit surface area of the carbon carrier will typically be 6.0/100 nm² or greater and 10.0/100 nm² or lower.

The number of catalyst metal particles per unit surface area of the carbon carrier may also be the value calculated from the mean particle size of the catalyst metal particles and the specific surface area of the carbon carrier.

The loading density of the catalyst metal particles, i.e. the loading amount (mass) of the catalyst metal particles per unit surface area of the carbon carrier, may be 6.0 mg/m² or greater, 6.5 mg/m² or greater, 7.0 mg/m² or greater, 8.0 mg/m² or greater, 10 mg/m² or greater, 12 mg/m² or greater or 15 mg/m² or greater, and 25 mg/m² or lower, 22 mg/m² or lower, 20 mg/m² or lower, 18 mg/m² or lower, 15 mg/m² or lower, 12 mg/m² or lower or 10 mg/m² or lower.

The loading density of the catalyst metal particles will typically be 6.5 mg/m² or greater and 25.0 mg/m² or lower.

The loading ratio of the catalyst metal particles, i.e. the loading amount (mass) of the catalyst metal particles per unit mass of the catalyst metal particles, may be 3 mass% or greater, 5 mass% or greater, 10 mass% or greater, 15 mass% or greater, 20 mass% or greater or 25 mass% or greater, and 75 mass% or lower, 60 mass% or lower, 50 mass% or lower, 40 mass% or lower or 35 mass% or lower.

### <Optional components>

The fuel cell electrode catalyst of the invention may also include optional components in addition to the carbon carrier and the catalyst metal particles. Optional components to be included in the fuel cell electrode catalyst of the invention may be one or more components selected from among carbon materials other than the carbon carrier, Ir particles, Ir·Ru alloy particles and Ir oxide. A carbon material other than the carbon carrier may be a carbon material that is not supporting the catalyst metal particles, and may be selected from among graphite, carbon fibers, graphitized carbon black and carbon nanotubes.

### <Method for producing fuel cell electrode catalyst>

The fuel cell electrode catalyst of the invention can be produced, for example, by a method that includes contacting the carbon carrier with the catalyst metal precursor (precursor contact step), and reducing the catalyst metal precursor and loading the catalyst metal particles onto the carbon carrier (loading step).

When the catalyst metal particles are Pt particles, a Pt precursor is used as the catalyst metal precursor, contacting the carbon carrier with the Pt precursor in an appropriate solvent, after which the Pt precursor is reduced and the Pt particles are supported on the carbon carrier to obtain a fuel cell electrode catalyst.

The carbon carrier used may be selected to be an appropriate carbon carrier for the desired fuel cell electrode catalyst.

The Pt precursor used may be appropriately selected from among Pt compounds that are soluble in the solvent. Examples of Pt precursors include PtCl₂, PtCl₄, PtBr₂, PtS, Pt(CN)₂ and PtCl₂(NH₃)₂ (dinitrodiamineplatinum).

The solvent used may be selected from among solvents that can dissolve the Pt precursor. For example, hydrochloric acid may be used when the Pt precursor is PtCl₂, an aqueous hydrobromic acid solution may be used when it is PtBr₂, an aqueous nitric acid solution may be used when it is PtCl₂(NH₃)₂, and water may be used when it is PtCl₄, PtS or Pt(CN)₂.

Reduction of the Pt precursor may be carried out using an appropriate reducing agent. The reducing agent may be ethanol, acetic acid, acetaldehyde, sodium borohydride or hydrazine, for example. The reduction may be carried out at a temperature of 10°C or higher and 100°C or lower for a period of 0.5 hour or longer and 8 hours or shorter. The reduction temperature is preferably 10°C or higher and 50°C or lower when sodium borohydride is used as the reducing agent, and preferably 60°C or higher and 100°C or lower when the reducing agent is ethanol, acetic acid, acetaldehyde or hydrazine.

A fuel cell electrode catalyst is thus obtained having Pt particles supported on a carbon carrier.

When the catalyst metal particles are Pt alloy particles, the fuel cell electrode catalyst can be obtained by any of the following methods, for example.

### (1) Method of successively reducing and loading Pt and alloy metal (Method 1):

The carbon carrier and Pt precursor are contacted in an appropriate solvent, after which the Pt precursor is reduced and the Pt particles are loaded onto the carbon carrier to obtain Pt-loaded carbon;
the Pt-loaded carbon and alloy metal precursor are contacted in an appropriate solvent, after which the alloy metal precursor is reduced to obtain Pt-alloy metal-loaded carbon having the alloy metal particles supported on the Pt-loaded carbon; and
the Pt-alloy metal-loaded carbon is heated to alloy the Pt and alloy metal, thereby obtaining a fuel cell electrode catalyst having Pt alloy particles supported on the carbon carrier.

### (2) Method of simultaneously reducing and loading Pt and alloy metal (Method 2):

The carbon carrier, Pt precursor and alloy metal precursor are contacted in an appropriate solvent, after which the Pt precursor and alloy metal precursor are reduced to obtain Pt-alloy metal-loaded carbon having Pt particles and alloy metal particles supported on the carbon carrier;
the Pt-alloy metal-loaded carbon is heated to alloy the Pt and alloy metal, thereby obtaining a fuel cell electrode catalyst having Pt alloy particles supported on the carbon carrier.

The term "alloy metal" used herein refers to a metal other than Pt in the Pt alloy composing the catalyst metal particles.

Method 1 and Method 2 for production of a fuel cell electrode catalyst with Pt alloy particles as the catalyst metal particles will now be described in order.

### (1) Method of successively loading Pt and alloy metal on carbon carrier (Method 1)

In Method 1, first the carbon carrier and Pt precursor are contacted in an appropriate solvent, and then the Pt precursor is reduced and the Pt particles are loaded onto the carbon carrier to obtain Pt-loaded carbon. This step can be carried out in the same manner as for production of a fuel cell electrode catalyst where the catalyst metal particles are Pt particles.

Next, the obtained Pt-loaded carbon and alloy metal precursor are contacted in an appropriate solvent, after which the alloy metal precursor is reduced to obtain a Pt-alloy metal-loaded carbon having alloy metal particles supported on the Pt-loaded carbon.

The alloy metal precursor used may be appropriately selected depending on the type of alloy metal in the desired fuel cell electrode catalyst. The alloy metal precursor used may be appropriately selected from among compounds that include the alloy metal and are soluble in the solvent. For example, it may be a hydroxide, chloride, sulfide, nitrate, sulfate or acetate of the desired alloy metal.

The solvent used may be selected from among solvents that can dissolve the alloy metal precursor that is used. For example, the solvent may be water.

The alloy metal precursor can be reduced using an appropriate reducing agent or neutralizer. The reducing agent may be sodium borohydride, hydrazine, hydrogen gas or formic acid, for example. The neutralizer may be sodium metaborate, sodium hydroxide, sodium carbonate or ammonia, for example.

Reduction using a reducing agent may be carried out at a temperature of 10°C or higher and 100°C or lower for a period of 0.5 hour or longer and 8 hours or shorter. The reduction temperature is preferably 10°C or higher and 50°C or lower when sodium borohydride is used as the reducing agent, and preferably 60°C or higher and 100°C or lower when the reducing agent is ethanol, acetic acid, acetaldehyde or hydrazine.

When a neutralizer is used for reduction of the alloy metal precursor, the alloy metal may be supported on the Pt-loaded carbon in at least a monovalent state and then heated for reduction and formation of an alloy with Pt. Reduction using a neutralizer may be carried out at a temperature of 60°C or higher and 100°C or lower for a period of 0.5 hour or longer and 8 hours or shorter.

A Pt-alloy metal-loaded carbon is thus obtained having alloy metal particles supported on the Pt-loaded carbon.

The obtained Pt-alloy metal-loaded carbon is then heated for alloying of the Pt and alloy metal, to obtain a fuel cell electrode catalyst having Pt alloy particles supported on the carbon powder support. The heating conditions for alloying of the Pt and alloy metal may be the same heating conditions described for Method (1).

A fuel cell electrode catalyst is thus obtained having Pt alloy particles supported on a carbon carrier.

The fuel cell electrode catalyst of the invention may be produced by the method as described above, or by the same method with suitable modification by a person skilled in the art.

### <Fuel cell anode>

According to another aspect of the invention there is provided a fuel cell anode having a catalyst layer that includes a fuel cell electrode catalyst of the invention.

The anode may have a suitable base material layer and a catalyst layer on the base material layer, the catalyst layer including the fuel cell electrode catalyst of the invention.

The base material layer used may be appropriately selected from among chemically and mechanically stable compounds that can withstand the fuel cell electrode catalyst and solvent, as well as the heat treatment and pressurizing treatment that are preferably carried out to form the electrode. Specific examples include polyimide, polyethylene, polypropylene, polysulfone and polytetrafluoroethylene sheets.

The catalyst layer includes the fuel cell electrode catalyst of the invention, and may further include an ionomer, and also optional components such as a binder, for example. An ionomer may be NAFION (sulfonated tetrafluoroethylene (co)polymer).

### <Fuel cell electrode assembly>

According to another aspect of the invention there is provided a fuel cell electrode assembly that includes the aforementioned anode.

The fuel cell electrode assembly may have a structure with the anode, solid polymer electrolyte membrane and cathode stacked in that order, where the anode may be an electrode including the fuel cell electrode catalyst of the invention.

The solid polymer electrolyte membrane and cathode of the fuel cell electrode assembly may be a publicly known solid polymer electrolyte membrane and cathode, respectively.

The fuel cell electrode assembly of the invention can employ as the anode an electrode that includes an electrode catalyst for a fuel cell of the invention, or one produced by a publicly known method.

### <Fuel cell>

According to another aspect of the invention there is provided a fuel cell that includes the aforementioned fuel cell electrode assembly. The fuel cell of the invention may be a solid polymer fuel cell.

The fuel cell of the invention includes a fuel cell electrode assembly of the invention. In addition, it may have a fuel channel on the anode side and an air channel and oxygen channel on the cathode side, for example.

The fuel cell of the invention can employ as the anode an electrode that includes a fuel cell electrode catalyst of the invention, or one produced by a publicly known method.

### EXAMPLES

### <Example 1>

### (1) Preparation of catalyst

The carbon carrier used was commercially available graphitized carbon black (trade name: "TOKABLACK #3845" by Tokai Carbon). The graphitized carbon black had a specific surface area of 49 m²/g, as measured by the BET method with nitrogen as the adsorbate.

A 1.0 g portion of graphitized carbon black was added to a solution of 0.52 g of 60 mass% nitric acid in 49.4 g of purified water, and the mixture was stirred for 30 minutes to obtain a dispersion. To this dispersion there was added a nitric acid solution containing dinitrodiamine platinum with 0.33 g equivalents of Pt metal, and the mixture was stirred for 15 minutes. Next, 7.63 g of ethanol was added as a reducing agent and the mixture was further stirred for 15 minutes, after which it was heated and stirred for 2 hours at 90°C for reduction of the Pt ion, causing precipitation as Pt particles on the carbon black.

The reaction system was then allowed to cool to a temperature of 40°C or lower while stirring, and the solid content was filtered out and collected.

The collected solid content was repeatedly washed with 1 L of purified water at 60°C. The washing was carried out repeatedly until the electric conductivity of the filtrate fell below 5 µS/cm.

The washed solid portion was dried at 80°C for 15 hours and then crushed to obtain a catalyst powder.

In XRD measurement of the obtained catalyst powder, based on the line width of the diffraction peak for the (220) plane of Pt, the mean particle size of the Pt particles calculated by the Scherrer formula was 2.3 nm. The number of Pt particles per unit area of the carrier was calculated from the mean particle size and the specific surface area of the carbon carrier.

### (2) Production of single cell for high-voltage endurance test

After dispersing the obtained catalyst powder in ethanol, an aqueous dispersion containing NAFION as the ionomer was added and the mixture was subjected to ultrasonic dispersion to prepare a coating solution for formation of an anode catalyst layer. The coating solution for formation of an anode catalyst layer was coated onto one side of a TEFLON^{R} sheet and dried to form an anode catalyst layer on the sheet.

A coating solution for formation of a cathode catalyst layer was prepared in the same manner as the coating solution for formation of an anode catalyst layer, except for using a catalyst powder having Pt supported on Ketjen Black (trade name "EC300" by Ketjen Black International Co.) instead of the aforementioned catalyst powder, and this was used to form a cathode catalyst layer on the sheet. The loading amount of Pt in the catalyst powder used in the cathode catalyst layer was 30 mass% based on the mass of the catalyst powder.

TEFLON sheets with the anode catalyst layer and cathode catalyst layer were laminated against the catalyst layer-forming sides of a double-sided polymer electrolyte membrane and hot pressed for transfer, after which the TEFLON sheets were released to obtain a laminated body with the anode catalyst layer, polymer electrolyte membrane and cathode catalyst layer stacked in that order. A diffusion layer was then set on the surface of each catalyst layer to produce a single cell for a high-voltage endurance test.

### (3) High-voltage endurance test

In an environment with a cell temperature of 40°C and a humidification degree of 128%, hydrogen was supplied to the cathode side and nitrogen was supplied to the anode side, while using a potentiostat (model "HZ-5000" by Hokuto Denko Corp.) to apply a voltage of 1.8 V for 4,400 seconds. The ECSA (electrochemical surface area) before and after the high-voltage endurance test was determined by CV measurement under these cell conditions.

### <Examples 2 to 7 and Comparative Examples 1 to 4>

Catalyst powders were prepared in the same manner as Example 1, except that the type of carbon carrier and the amount of dinitrodiamine platinum (Pt metal equivalent) used were as listed in Table 1, and these were used to produce single cells for high-voltage endurance testing which were each subjected to a high-voltage endurance test.

### <Example 8 and Comparative Example 5>

Single cells for high-voltage endurance testing were produced in the same manner as Example 1, except for using the catalyst powder obtained in Example 3 after heat treatment under an argon airflow, and each was subjected to a high-voltage endurance test. The heat treatment conditions were 250°C, 2 hours in Example 8 and 300°C, 2 hours in Comparative Example 5.

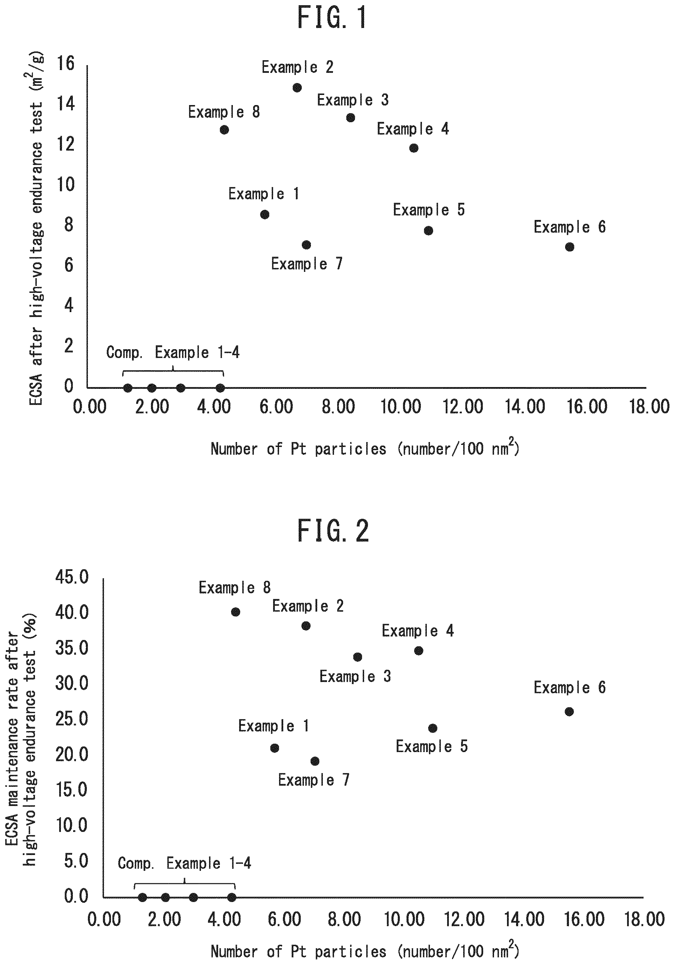

The results for the Examples and Comparative Examples are shown in Table 1. Fig. 1 is a graph showing the relationship between the number of Pt particles per unit specific surface area of the carbon carrier (number/100 nm²) and post-endurance test ECSA, for each of the catalysts. Fig. 2 is a graph showing the relationship between the number of Pt particles per unit specific surface area of the carbon carrier (number/100 nm²) and post-endurance test ECSA maintenance rate, for each of the catalysts.

Since the ECSA value prior to the high-voltage endurance test was low in Comparative Example 5, no test was carried out.

### [Table 1]

**Table 1**

| | Carbon carrier | | Dinitrodiamine platinum amount (g-Pt) | Heat treatment | Pt particles | | | ECSA | | |
|---|---|---|---|---|---|---|---|---|---|---|
| | Type | Specific surface area (m²/g) | | | Loading density | | Mean particle size (nm) | Before endurance (m²/g) | After endurance (m²/g) | Maintenance rate (%) |
| | | | | | Mass (mg/m²) | Count (number/100 nm²) | | | | |
| Example 1 | #3845 | 49 | 0.33 | Without | 6.73 | 5.72 | 2.3 | 40.8 | 8.6 | 21.1 |
| Example 2 | #3845 | 49 | 0.43 | Without | 8.78 | 6.76 | 2.4 | 38.9 | 14.9 | 38.3 |
| Example 3 | #3845 | 49 | 0.54 | Without | 11.02 | 8.49 | 2.4 | 39.5 | 13.4 | 33.9 |
| Example 4 | #3845 | 49 | 0.67 | Without | 13.67 | 10.52 | 2.4 | 34.2 | 11.9 | 34.8 |
| Example 5 | #3845 | 49 | 0.82 | Without | 16.73 | 10.99 | 2.6 | 32.7 | 7.8 | 23.9 |
| Example 6 | #3845 | 49 | 1.00 | Without | 20.41 | 15.54 | 2.5 | 26.7 | 7.0 | 26.2 |
| Example 7 | FCX80 | 73 | 0.67 | Without | 9.18 | 7.06 | 2.4 | 36.9 | 7.1 | 19.2 |
| Example 8 | #3845 | 49 | 0.54 | 250°C, 2h | 11.02 | 4.42 | 3.2 | 31.8 | 12.8 | 40.3 |
| Comp. Example 1 | #3845 | 49 | 0.11 | Without | 2.24 | 2.08 | 2.2 | 55.4 | 0.0 | 0.0 |
| Comp. Example 2 | #3845 | 49 | 0.25 | Without | 5.10 | 4.29 | 2.3 | 46.6 | 0.0 | 0.0 |
| Comp. Example 3 | 600 JD | 300 | 0.43 | Without | 1.43 | 1.31 | 2.2 | 54.9 | 0.0 | 0.0 |
| Comp. Example 4 | Li435 | 130 | 0.43 | Without | 3.31 | 3.02 | 2.2 | 32.9 | 0.0 | 0.0 |
| Comp. Example 5 | #3845 | 49 | 0.54 | 300°C, 2h | 11.02 | 0.53 | 7.0 | 16.4 | - | - |

The abbreviations for the types of carbon carrier in Table 1 are as follows.
#3845: TOKABLACK #3845, Tokai Carbon, specific surface area: 49 m²/g (BET method (N₂))
FCX80: FCX80, Cabot Co., specific surface area: 73 m²/g
600JD: Graphitized Ketjen 600JD (Lion Specialty Chemicals Co., Ltd., specific surface area: 300 m²/g)
Li435:

The dinitrodiamine platinum amounts in Table 1 represent Pt metal equivalent masses (g-Pt).

The following may be concluded from the results in Table 1 and Fig. 1 and Fig. 2.

The catalysts of Comparative Examples 1 to 4 which had Pt loading densities of less than 6.0 mg/m² did not have ECSA after the high-voltage endurance test.

In contrast, the catalysts of Examples 1 to 8 which had Pt loading densities of 6.0 mg/m² or greater and 16.0/100 nm² or lower, exhibited significant ECSA after high-voltage endurance testing and high ECSA maintenance rates, thus confirming excellent endurance. In particular, the catalysts of Examples 1 to 7 which had mean particle sizes of 6.0 nm or smaller for the Pt particles had large ECSA after high-voltage endurance testing, and thus exhibited highly excellent endurance.

## Claims

1. A fuel cell electrode catalyst having catalyst metal particles made of Pt or a Pt alloy supported on a carbon carrier,
wherein the number of catalyst metal particles per unit surface area of the carbon carrier is 4.3/100 nm² or greater and 16.0/100 nm² or lower.

2. The fuel cell electrode catalyst according to claim 1, wherein the number of catalyst metal particles per unit surface area of the carbon carrier is 6.0/100 nm² or greater and 10.0/100 nm² or lower.

3. The fuel cell electrode catalyst according to claim 1 or 2, wherein the mean particle size of the catalyst metal particles is 5.0 nm or smaller.

4. The fuel cell electrode catalyst according to any one of claims 1 to 3, wherein the mean particle size of the catalyst metal particles is 2.0 nm or larger and 3.5 nm or smaller.

5. The fuel cell electrode catalyst according to any one of claims 1 to 4, wherein the loading amount of the catalyst metal particles per unit surface area of the carbon carrier is 6.0 mg/m² or greater.

6. The fuel cell electrode catalyst according to claim 5, wherein the loading amount of the catalyst metal particles per unit surface area of the carbon carrier is 6.5 mg/m² or greater and 25.0 mg/m² or lower.

7. The fuel cell electrode catalyst according to any one of claims 1 to 6, wherein the carbon carrier consists of graphitized carbon particles.

8. The fuel cell electrode catalyst according to any one of claims 1 to 7, wherein the specific surface area of the carbon carrier is 10 m²/g or greater and 100 m²/g or lower.

9. The fuel cell electrode catalyst according to claim 8, wherein the specific surface area of the carbon carrier is 20 m²/g or greater and 70 m²/g or lower.

10. A fuel cell anode having a catalyst layer that includes a fuel cell electrode catalyst according to any one of claims 1 to 9.

11. A fuel cell electrode assembly that includes an anode according to claim 10.

12. A fuel cell that includes a fuel cell electrode assembly according to claim 11.
